# EUROPÄISCHE PATENTSCHRIFT

(11) **EP 4 431 787 B1**
(45) Veröffentlichungstag und Bekanntmachung des Hinweises auf die Patenterteilung: **22.01.2025**
(21) Anmeldenummer: 23162023.8
(22) Anmeldetag: 15.03.2023
(51) Int. Cl.: F16P 3/14

(54) **BERÜHRUNGSLOSE ABSICHERUNG EINER MASCHINE**
CONTACTLESS SECURING OF A MACHINE
PROTECTION SANS CONTACT D'UNE MACHINE

(43) Veröffentlichungstag der Anmeldung: 18.09.2024
(73) Patentinhaber: SICK AG, 79183 Waldkirch (DE)
(72) Erfinder: Hammes, Dr. Markus, 79117 Freiburg (DE); Hofmann, Dr. Christoph, 79108 Freiburg (DE)

(56) Entgegenhaltungen:
- EP-A1- 3 470 879
- US-A1- 2008 285 842

## Beschreibung

Die Erfindung betrifft ein Verfahren und eine Überwachungsvorrichtung zur berührungslosen Absicherung einer Maschine nach dem Oberbegriff von Anspruch 1 beziehungsweise 15.

In der berührungslosen Überwachung zur Absicherung von Gefahren, wie sie Maschinen im industriellen Umfeld darstellen, werden sehr häufig optoelektronische Sensoren eingesetzt. Dabei wird die Maschine teilweise baulich versperrt, etwa mit Zäunen, und in einem verbleibenden Zugangsbereich mit einem optoelektronischen Sensor wie einem Lichtgitter abgesichert. Alternativ zu einem Lichtgitter kann ein Laserscanner mit einer Schutzfeldüberwachung eingesetzt werden. Ein Schutzfeld ist ein konfigurierter Teilbereich des abgescannten Bereichs, das während des Betriebs der Maschine vom Bedienpersonal nicht betreten werden darf. Wird ein unzulässiger Schutzfeldeingriff erkannt, etwa ein Bein einer Bedienperson, so wird die Maschine durch Ausgabe eines sicherheitsgerichteten Signals an einem sicheren Ausgang (OSSD, Output Signal Switching Device) in einen sicheren Zustand überführt. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik oder verschiedene Funktionsüberwachungen, speziell die Überwachung der Verschmutzung optischer Bauteile einschließlich einer Frontscheibe.

Eine besondere Herausforderung stellt sich, wenn im regulären Betrieb immer wieder Zugang zu der abgesicherten Maschine erforderlich ist. Beispiele sind Roboterzellen, in denen industrielle Roboter Produktions- oder Logistikschritte übernehmen, die punktuell unterstützt werden müssen. Hier geht es zum Beispiel um die Zuführung oder Abholung von Material. In der Praxis werden solche Bereiche regelmäßig immer noch mit Zäunen und Lichtgittern abgesichert. Eine Person, die den Bereich der Maschine betritt, wird erkannt und daraufhin die Maschine abgeschaltet. Nach Erledigung der unterstützenden Arbeitsschritte an der Maschine und Verlassen des Maschinenbereichs ist ein manueller Wiederanlauf erforderlich, indem beispielsweise die Person einen außerhalb des abgesicherten Bereichs angebrachten Taster betätigt. Das ist deshalb erforderlich, weil die Sensoren nicht sicher erkennen, ob sich die Person tatsächlich wieder entfernt hat. Ein Lichtgitter erkennt nur den Durchtritt selbst, kann aber nicht entscheiden, auf welcher Seite die Person sich anschließend befindet. Das Schutzfeld eines Laserscanners kann nicht immer den gesamten Bereich vor der Maschine abdecken, beispielsweise weil sonst die Maschine im Betrieb das Schutzfeld auslösen würde. Außerdem könnte die Person auf ein festes Objekt wie einen Sockel der Maschine aufsteigen und so für den Laserscanner unsichtbar werden. Es muss also eine Person dafür verantwortlich sein, dass die Maschine beim Wiederanlauf niemanden gefährdet.

Dieses umständliche Vorgehen, das Auswirkungen auf die Produktivität hat, lässt sich nicht einmal durch ein autonomes Fahrzeug zur Materialzuführung lösen, denn auch das Fahrzeug verletzt das Schutzfeld, so dass die Maschine abgeschaltet wird. Objektiv erforderlich wäre das nicht, weil keine Person gefährdet ist. Zudem bedarf es immer noch der Anwesenheit einer Person für den Wiederanlauf. Die Maschine muss unter Umständen mit der Weiterarbeit warten, bis eine Person gekommen ist und den Wiederanlauf freigibt.

Es stehen inzwischen sichere 3D-Sensoren für eine dreidimensionale Schutzfeldauswertung zur Verfügung. Ein Beispiel dafür ist eine 3D-Kamera, die einen Abstand misst und dadurch eine Tiefeninformation gewinnt. Die erfassten dreidimensionalen Bilddaten mit Abstands- oder Entfernungswerten für die einzelnen Pixel werden auch als 3D-Bild, Entfernungsbild oder Tiefenkarte bezeichnet. 3D-Kameras gibt es in verschiedenen Technologien, darunter Lichtlaufzeit-, Stereoskopie- und Projektionsverfahren oder plenoptische Kameras. In einer noch etwas näher betrachteten Lichtlaufzeitkamera (TOF, Time of Flight) wird eine Szene mit amplitudenmoduliertem Licht ausgeleuchtet. Das aus der Szene zurückkehrende Licht wird empfangen und mit der gleichen Frequenz demoduliert, die auch für die Modulation des Sendelichts verwendet wird (Lock-In-Verfahren). Aus der Demodulation resultiert ein Amplitudenmesswert, der einem Abtastwert des Empfangssignals entspricht. Für die Phasenbestimmung eines periodischen Signals sind nach dem Nyquist-Kriterium mindestens zwei Abtastwerte notwendig. Deshalb wird die Messung mit unterschiedlichen relativen Phasenlagen zwischen den Signalen für die sendeseitige Modulation und die empfangsseitige Demodulation durchgeführt. Damit lässt sich dann die laufzeitbedingte absolute Phasenverschiebung zwischen Sende- und Empfangssignal ermitteln, die wiederum proportional zum Objektabstand in der Szene ist. Eine dreidimensionale Überwachung löst aber nicht schon an sich die geschilderte Problematik. Sichere und in der Realität bewährte Algorithmen, die selektiv und verlässlich Personen in der Nähe der Maschine erkennen, stehen noch nicht zur Verfügung, und jedenfalls erfordern sie einen hohen Entwicklungsaufwand und besonders leistungsfähige Hardware.

Aus jüngerer Zeit sind weiterhin Sicherheitslaserscanner und Sicherheitskameras bekannt geworden, die mehrere Schutzfelder simultan auswerten. Das schafft eine Voraussetzung für neue Anwendungen, löst aber ebenso wenig wie ein dreidimensionales Schutzfeld schon für sich die geschilderte Problematik. Außerdem ist die simultane Auswertung sehr rechenintensiv und nur eine äußerst begrenzte Anzahl simultan ausgewerteter Schutzfelder vorgesehen.

Die EP 3 153 885 A1 offenbart eine optoelektronische Schutzeinrichtung, die überwacht, welcher von mehreren Schutzbereichen durch ein Objekt verletzt wird (Schutzbereichsverletzung) und welchen Schutzbereich das Objekt verlassen hat (Schutzbereichsfreigabe). Bei einer vorbestimmten Reihenfolge von Schutzbereichsverletzungen und Schutzbereichsfreigaben wird der Anlagenbetrieb automatisch freigegeben. Damit wird aber nach wie vor die Maschine unterschiedslos durch die Annäherung einer Person und eines automatischen Fahrzeugs zumindest vorübergehend stillgesetzt.

In der EP 3 575 666 A1 wird eine Vorrichtung zur Absicherung eines Gefahrenbereichs einer Anlage vorgestellt, die einen an den Gefahrenbereich angepassten Schutzbereich überwacht. Es wird der Bewegungsablauf des Objekts beim Verlassen des Schutzbereichs erfasst und bei Registrieren eines gültigen Bewegungsablaufs ein Freigabesignal generiert, das den gefahrbringenden Betrieb der Anlage wieder aktiviert. In einer Ausführungsform ist mittels mehrerer Teilzonen des Schutzbereichs ein gültiger Bewegungsablauf definiert, der nur durch ein Fahrzeug, nicht jedoch durch andere Objekte oder eine Person generierbar ist. Diese Klassifikation von Fahrzeugen und Personen bleibt aber zu wenig trennscharf.

Aus der EP 3 425 256 A1 ist ein Zugangsabsicherungssystem bekannt, das mit einem ersten optoelektronischen Sensor ein Schutzfeld und mit einem vorgelagerten zweiten optoelektronischen Sensor ein Konturerkennungsfeld überwacht. Wird das Konturerkennungsfeld in seiner vollen Breite unterbrochen, so wird die Sicherheitsfunktion des Schutzfeldes unterdrückt. Das ist aufgrund der Abmessungen nur mit einem Fahrzeug wie einem Gabelstapler möglich, eine Person wäre dafür zu klein. Somit funktioniert diese Art der Unterscheidung zwischen Person und Fahrzeug nicht für kleinere Fahrzeuge, wie sie in der Logistik üblich sind.

Die EP 3 470 879 A1 konfiguriert in einem Laserscanner mindestens teilweise einander überlappende Überwachungsfelder. Dadurch entstehen Überwachungssegmente, die sich voneinander dadurch unterscheiden, welche Überwachungsfelder dort überlappen. Die hardwareseitig vorgesehene Anzahl Überwachungsfelder wird so auf die Überwachungssegmente verfeinert. Mit einer Klassifikation von eingreifenden Objekten oder einem Wiederanlauf befasst sich das Dokument jedoch nicht.

Es ist daher Aufgabe der Erfindung, eine verbesserte differenzierte Absicherung zu erreichen.

Diese Aufgabe wird durch ein Verfahren und eine Überwachungsvorrichtung zur berührungslosen Absicherung einer Maschine nach Anspruch 1 beziehungsweise 15 gelöst. Die Maschine ist beispielsweise ein Roboter oder eine Bearbeitungsmaschine, die im Betrieb immer wieder von dem Fahrzeug angefahren werden muss, etwa um Teile zuzuführen oder bearbeitete Teile abzuholen. Die Maschine bildet einen Gefahrenbereich, da es durch ihren Betrieb zu Unfällen mit Personenschäden kommen kann. Absicherung bedeutet, dass solche Situationen durch rechtzeitiges Einwirken auf die Maschine vermieden werden.

Dafür überwacht mindestens ein optoelektronischer Sensor mehrere Schutzfelder im Umfeld der Maschine. Schutzfelder sind wie üblich konfigurierte Teilbereiche des Überwachungsbereichs des Sensors, die auf das Eindringen von Objekten überwacht werden, was dann als Schutzfeldeingriff bezeichnet wird. Der Name Schutzfeld ist historisch bedingt. Wie später verdeutlicht wird, werden erfindungsgemäß dreidimensionale Raumbereiche als Schutzfelder konfiguriert und überwacht. Die Schutzfelder werden simultan überwacht, sei es durch parallele Schutzfeldauswertung oder sequentielle Schutzfeldauswertung in Zyklen unterhalb der Ansprechzeit, was dann für alle praktischen Belange und im Rahmen von Sicherheitsanforderungen immer noch gleichzeitig ist.

Der optoelektronische Sensor ist vorzugsweise ein Sicherheitssensor, und die Schutzfeldauswertungen und die noch folgenden für die Absicherung und anschließende Freigabe relevanten Auswertungen von Schutzfeldeingriffen sind vorzugsweise sichere Auswertungen. Sicher und Sicherheit bedeuten wie in der gesamten Beschreibung, dass Maßnahmen ergriffen sind, um Fehler bis zu einem spezifizierten Sicherheitsniveau zu beherrschen beziehungsweise Vorschriften einer einschlägigen Sicherheitsnorm für Maschinensicherheit oder berührungslos wirkende Schutzeinrichtungen einzuhalten, von denen einleitend einige genannt sind. Nicht sicher ist der Gegenbegriff zu sicher, für nicht sichere Geräte, Übertragungswege, Auswertungen und dergleichen sind demnach die genannten Anforderungen an Fehlersicherheit nicht erfüllt.

Ein erkannter Schutzfeldeingriff, auch als Schutzfeldverletzung bezeichnet, wird an einem sicheren Ausgang des Sensors gemeldet, und zwar in einer Weise, in der erkennbar bleibt, welches der mehreren Schutzfelder verletzt wurde. Dazu kann beispielsweise ein sicherer Ausgang (OSSD, Output Signal Switching Device) je einem der mehreren Schutzfelder vorgesehen sein. Anstelle jeweiliger eigener Anschlüsse können die einem Schutzfeld zuordenbaren sicheren Signale für eine zugeordnete Schutzfeldverletzung aber auch als Bit oder dergleichen einer komplexeren sicheren Ausgabe realisiert sein.

Die Schutzfelder sind so konfiguriert, dass ein sich der Maschine näherndes Fahrzeug eine andere Abfolge von Schutzfeldeingriffen auslöst als eine sich der Maschine nähernde Person. Durch Vergleich der erfassten Abfolge von Schutzfeldeingriffen mit einer für ein Fahrzeug beziehungsweise eine Person erwarteten Abfolge kann somit unterschieden werden, ob sich ein Fahrzeug oder eine Person der Maschine nähert.

Die Erfindung geht von dem Grundgedanken aus, mit dem optoelektronischen Sensor dreidimensionale Schutzfelder zu überwachen und die damit geschaffene zusätzliche Flexibilität der Konfiguration von Schutzfeldern auszunutzen, um ein sich näherndes Fahrzeug als solches zu erkennen. Der optoelektronische Sensor ist beispielsweise eine 3D-Kamera, insbesondere Lichtlaufzeitkamera, ein Mehrlagen-Laserscanner oder ein 3D-LIDAR. Die Schutzfelder werden in zwei Lagen konfiguriert und ausgewertet, einer unteren Lage vorzugsweise in Bodennähe und einer darüber angeordneten oberen Lage. Die Schutzfeldkonfiguration in den beiden Lagen unterscheidet sich voneinander. Ein horizontaler 2D-Schnitt durch die obere Lage liefert somit ein anderes Bild der Schutzfelder als ein horizontaler 2D-Schnitt durch die untere Lage. Das bezieht sich zunächst auf die gesamte Schutzfeldkonfiguration, ein einzelnes Schutzfeld oder mehrere der Schutzfelder können durchaus in beiden Lagen gleich konfiguriert sein, und der Unterschied kann auch dadurch entstehen, dass mindestens ein Schutzfeld überhaupt nur in einer Lage vorgesehen ist und in der anderen Lage nicht. Innerhalb einer jeweiligen Lage sind die Schutzfelder zur Vereinfachung der Konfiguration über die Höhe hinweg vorzugsweise gleich, 2D-Schnitte durch die Schutzfelder einer Lage und parallel zur Trennebene der Lagen sind dann untereinander identisch.

Eine Annäherung in der unteren Lage beziehungsweise in Bodennähe erzeugt somit eine andere Abfolge von Schutzfeldeingriffen als eine Annäherung in der oberen Lage. Dabei ist zu beachten, dass für eine Person und jedes sonstige Objekt, außer einem fliegenden Objekt wie eine Drohne, keine exklusive Annäherung in der oberen Lage, sondern nur zugleich in der unteren und oberen Lage möglich ist. Ein Fahrzeug einer Höhe, die in der unteren Lage bleibt, kann damit anhand der Abfolge der Schutzfeldeingriffe von einer aufrecht gehenden Person unterschieden werden, die auch Schutzfeldeingriffe in der oberen Lage auslöst. Eine Person könnte sich noch kriechend annähern. Dieser Fall ist angesichts der nicht sichtbaren Schutzfelder, die eine kriechende Person dennoch vermeiden müsste, allenfalls für höchste Sicherheitsstufen relevant. Zudem ist ein Unterkriechschutz durch weitere Anforderungen an die Schutzfeldkonfiguration in später noch zu erläuternden Ausführungsformen ebenfalls möglich.

Die Schutzfelder können in mehrals zwei Lagen konfiguriert werden, beispielsweise eine unterste Lage für ein Fahrgestell, eine mittlere Lage für den Rest eines Fahrzeugs und eine obere Lage für eine gehende Person. Damit könnte dann beispielsweise noch zwischen zulässigen und unzulässigen Fahrzeugen unterschieden werden. Vorzugsweise bleibt es, um die Konfiguration und Auswertung nicht unnötig komplex zu gestalten, bei zwei Lagen.

Das Verfahren ist ein computerimplementiertes Verfahren, das beispielsweise in einer Recheneinheit des optoelektronischen Sensors und/oder einer angeschlossenen Recheneinheit abläuft. Die Konfiguration der Schutzfelder geht der berührungslosen Absicherung voraus, sie erfolgt wegen der komplexen zu beachtenden Sicherheitsaspekte typischerweise manuell durch einen Sicherheitsexperten. Dabei sind aber automatische Unterstützungen möglich, wie Vorschläge für Schutzfelder und ein Konfigurationsprogramm mit graphischer Unterstützung beispielsweise ähnlich einem CAD-Programm, mit dem geometrische Objekte als Teile von Schutzfeldern in Bilder des Umfelds der Maschine eingepasst werden.

Die Erfindung hat den Vorteil, dass eine sichere Unterscheidbarkeit zwischen einer sich nähernden Person und einem sich nähernden Fahrzeug ermöglicht wird. Sie schafft zugleich eine Grundlage für einen automatischen Wiederanlauf der Maschine, nachdem sich ein Fahrzeug angenähert und wieder entfernt hat. Beides ist für die Produktivität der Maschine von sehr hoher Bedeutung. Dabei kann die Erfindung mit verfügbarer Technik umgesetzt werden. Es sind keine neuen, hochkomplexen Bildauswertungen zu entwickeln, die selektiv eine Person erkennen. Vielmehr basiert die erfindungsgemäße Unterscheidung auf der bewährten und vorhandenen sicheren Schutzfeldauswertung.

Vorzugsweise wird bei Erkennung einer sich an die Maschine annähernden Person die Maschine abgesichert. Die Abfolge von Schutzfeldeingriffen entspricht also nicht derjenigen für ein Fahrzeug, das nur die Schutzfelder der unteren Lage durchfährt und sich vorzugsweise der Maschine ohne Absicherung nähern darf, wobei zumindest eine Anpassung des Verhaltens der Maschine auch bei einem heranfahrenden Fahrzeug denkbar ist. Absichern bedeutet je nach Anwendung eine angemessene Reaktion, die einen Unfall ausschließt. Das kann ein Verlangsamen der Maschine, ein Ausweichen oder eine Änderung des weiteren Arbeitsablaufs bis hin zu einem sofortigen Anhalten beziehungsweise Verbringen in einen sicheren Zustand sein.

Es werden bevorzugt nur zwei Schutzfelder überwacht, die insbesondere Teilschutzfelder aufweisen. Die beiden Schutzfelder werden im Folgenden auch als Schutzfeld A und Schutzfeld B und die zugeordneten sicheren Ausgangssignale, die einen Schutzfeldeingriff anzeigen, als OSSD A und OSSD B bezeichnet. In dieser Ausführungsform genügt die Fähigkeit des optoelektronischen Sensors, lediglich zwei Schutzfelder simultan zu überwachen. Auf den ersten Blick scheint das bei Weitem nicht zu genügen, um Personen und Fahrzeuge zu unterscheiden, da es nurvierZustände gibt, nämlich kein Schutzfeld verletzt, eines der Schutzfelder A oder B verletzt oder beide Schutzfelder A und B verletzt. Die Schutzfelder lassen aber vorzugsweise eine nahezu beliebig komplexe Geometrie zu. Das kann Teilschutzfelder in einem der Schutzfelder oder beiden Teilschutzfelder einschließen, also nicht zusammenhängende Teilbereiche eines Schutzfeldes in im Prinzip beliebiger Anzahl, die im Rahmen des Auflösungsvermögens des optoelektronischen Sensors beliebig klein sein können. Auch ein zusammenhängendes Schutzfeld kann im Übrigen, in nur einer der Lagen betrachtet, in nicht zusammenhängende Teilschutzfelder zerfallen, wie man sich durch eine kammartige Struktur über beide Lagen veranschaulichen kann. Eine Vielzahl von Teilschutzfeldern eines Schutzfeldes unterscheidet sich deutlich von einer Vielzahl von Schutzfeldern, denn bei den Teilschutzfeldern ist ein Schutzfeldeingriff nur dem gemeinsamen Schutzfeld zugeordnet, ohne die Information, welches Teilschutzfeld den Schutzfeldeingriff ausgelöst hat. Diese Information kann aber erfindungsgemäß anhand der Abfolge von Schutzfeldeingriffen, somit dem Zeitverhalten oder Zeitmustern, durch eine nachgelagerte Auswertung gewonnen werden.

Die beiden Schutzfelder werden bevorzugt von jeweils einem eigenen optoelektronischen Sensor auf Schutzfeldeingriffe überwacht. Dafür genügen optoelektronische Sensoren, die jeweils nur ein einziges Schutzfeld überwachen können, oder deren Fähigkeit zur simultanen Schutzfeldüberwachung wird nicht genutzt. Durch die Redundanz der Sensoren wird ein höheres Sicherheitsniveau erreicht.

Die Schutzfelder sind bevorzugt so konfiguriert, dass bei Annäherung eines Objekts in der unten Lage zuerst ein anderes Schutzfeld verletzt wird als in der oberen Lage. Damit indiziert bereits der erste Schutzfeldeingriff einer Annäherungsbewegung eine Person oder ein Fahrzeug. Im Falle eines Schutzfeldeingriffs in der oberen Lage kann vorzugsweise sofort eine Absicherung erfolgen. Es ist unmittelbar klar, dass dies kein zulässiges Fahrzeug sein kann. Das entspricht der herkömmlichen Funktion eines Schutzfeldes. Ein Schutzfeldeingriff in der unteren Lage ist dazu im Gegensatz für ein sich der Maschine annäherndes Fahrzeug vorzugsweise nur indikativ, dann sind für eine sichere Entscheidung weitere Auswertungen der kommenden Abfolge von Schutzfeldeingriffen erforderlich, bis das Fahrzeug vor der Maschine angekommen ist.

In der oberen Lage ist bevorzugt nur ein Schutzfeld konfiguriert, insbesondere ohne Teilschutzfelder. Damit kann die klassische Absicherungsfunktion für die obere Lage bereits realisiert werden. Die Abfolge der Schutzfeldeingriffe fällt auf den einfachsten Fall zurück, nämlich eine rein binäre Information, ob das Schutzfeld in der oberen Lage verletzt ist oder nicht. In der unteren Lage hingegen sind vorzugsweise Schutzfelder und/oder Teilschutzfelder mit komplexeren Geometrien konfiguriert, die bei einer Annäherung eines Fahrzeugs eine variierende Abfolge im Sinne von wechselnden Schutzfeldeingriffen erzeugen.

In der unteren Lage sind vorzugsweise zwei Schutzfelder oder Teilschutzfelder der zwei Schutzfelder derart konfiguriert, dass in einer Richtung einer Annäherung an die Maschine die beiden Schutzfelder oder Teilschutzfelder einander abwechseln. Wegen der dreidimensionalen Schutzfelder sind drei Richtungen oder Dimensionen zu unterscheiden: eine Höhenrichtung, in der die obere Lage über der unteren Lage angeordnet ist, und innerhalb einer Ebene gleiche Höhe die Richtung der Annäherung und eine Richtung quer dazu. Eine Annäherungsbewegung in der unteren Lage löst in dieser Ausführungsform eine Abfolge ABAB... der Schutzfeldeingriffe aus.

Die sich abwechselnden Schutzfelder oder Teilschutzfelder überlappen einander bevorzugt teilweise. Damit ergibt sich bei einer Annäherungsbewegung in der unteren Lage eine Abfolge ..A AB B ... Die zwischenzeitliche Verletzung beider Schutzfelder bei fortgesetzter Annäherungsbewegung aufgrund des Überlapps ermöglicht es, einen Richtungswechsel zu erkennen. Bevorzugt ist jeweils ein Freibereich zwischen den sich abwechselnden Schutzfeldern oder Teilschutzfeldern angeordnet. Damit entsteht in der Abfolge eine Lücke, beispielsweise .. A (leer) B (leer)... Besonders bevorzugt sind Überlapp und Freibereich kumuliert, mit einer Abfolge wie ..A AB B (leer) A AB .. Der Freibereich kann so groß sein wie ein Teilschutzfeld und/oder deren gegenseitiger Überlapp. Eine andere bevorzugte Ausdehnung des Freibereichs misst sich daran, ob ein zulässiges Fahrzeug hineinpasst, ohne ein Schutzfeld auszulösen, entsprechend einer Fahrzeuglänge von beispielsweise 0,5 m bis 2 m. Der Überlappungsbereich kann so groß sein wie der Freibereich, aber die eigentliche Forderung ist hier nur, dass bei Eindringen in den Überlappungsbereichs beide überlappenden Schutzfelder zuverlässig ausgelöst werden. Dafür genügt eine geringere Ausdehnung von beispielsweise 20 cm.

In der unteren Lage sind vorzugsweise in einer Richtung quer zu einer Richtung einer Annäherung der Maschine mehrere Schutzfelder oder Teilschutzfelder konfiguriert. Das betrifft nun eine seitliche Richtung oder Querrichtung, die dritte Richtung nach einer Höhenrichtung und einer Richtung einer Annäherung an die Maschine. Hier kann weiter differenziert werden, etwa um bestimmte Fahrzeugkonturen zu prüfen oder verschiedene Gassen zu bilden. Beispielsweise kann es eine linke Gasse mit einer Abfolge ...ABAB.. und eine rechte Gasse mit einer Abfolge ...BABA.. von Schutzfeldeingriffen bei Annäherung durch die jeweilige Gasse geben.

Bevorzugt ist mindestens ein Freibereich zwischen den Schutzfeldern oder Teilschutzfeldern der Schutzfelder der unteren Lage in seiner lateralen Ausdehnung so klein, dass eine liegende oder kriechende Person darin nicht vollständig Platz findet. Damit wird der schon erwähnte Unterkriechschutz realisiert. Der Freiraum ist in seiner lateralen Ausdehnung an ein zulässiges Fahrzeug angepasst. In der Abfolge von Schutzfeldeingriffen bei einer Annäherung eines Fahrzeugs ergibt sich dadurch eine Pause, während das Fahrzeug sich im Freibereich befindet und kein Schutzfeld verletzt. Sollte eine Person versuchen, durch Kriechen oder gar Rollen auf dem Boden die zulässige Abfolge von Schutzfeldeingriffen eines Fahrzeugs nachzuahmen, so gelingt das nicht, weil die Person nicht in den Freiraum passt und deshalb in zumindest einer der drei möglichen Richtungen doch ein Schutzfeld verletzt.

Aus der Abfolge von Schutzfeldeingriffen wird bevorzugt eine Bewegungsrichtung bestimmt. Je nach Schutzfeldkonfiguration ist das möglicherweise nur für die untere Lage und damit das Fahrzeug möglich, weil zusätzliche Schutzfeldeingriffe in die obere Lage durch die Person die Abfolge verändern. Eine Annäherung einer Person soll aber vorzugsweise ohnehin nicht zugelassen werden, sondern nur das Fahrzeug in die Nähe der arbeitenden Maschine gelangen dürfen, während für eine Person abgesichert wird. Durch komplexere Schutzfeldkonfigurationen ist aber auch die Erkennung einer Bewegungsrichtung in der oberen Lage möglich. Die Erkennung einer Bewegungsrichtung ist besonders zuverlässig in der oben angegebenen Schutzfeldkonfiguration mit gegenseitigem Überlapp und Freiraum. Bei einer Abfolge .. A AB B (leer).. ist die Bewegungsrichtung vorwärts auf die Maschine zu und entsprechend bei einer Abfolge ..B AB A (leer).. rückwärts von der Maschine weg oder umgekehrt.

Vorzugsweise wird ein Zähler bei einem Schutzfeldeingriff oder einem endenden Schutzfeldeingriff entsprechend der Bewegungsrichtung herauf- und heruntergezählt und aus einem Stand des Zählers eine Position bestimmt. Ein Schutzfeldeingriff bedeutet, dass ein Objekt eingedrungen ist, ein endender Schutzfeldeingriff entsprechend, dass das Objekt das Schutzfeld wieder verlassen hat. Über den Zähler kann bei einer Vielzahl von Teilschutzfeldern differenziert werden, welches Teilschutzfeld betroffen ist. In Kenntnis der jeweiligen Bewegungsrichtung kann so die Position inkrementell mit dem Zähler erfasst werden. Dabei kann schon der Zählerstand an sich als Position interpretiert werden, oder es wird eine reale Position aus dem Zählerstand und der Schutzfeldgeometrie berechnet.

Die beiden Schutzfelder beziehungsweise deren Teilschutzfelder bilden vorzugsweise jeweils eine Codespur. Damit soll eine Analogie zu Inkrementalgebern hergestellt werden. Bei einem Inkrementalgeber werden zwei zueinander versetzte Codespuren abgetastet, und das entstehende Pulsmuster in den Abtastsignalen wird ausgewertet, um eine inkrementelle Position zu gewinnen. Entsprechend codieren die Schutzfelder beziehungsweise deren Teilschutzfelder und die Lücken für Eins und Null. Die Abtastung dieser besonderen Codespur erfolgt dadurch, dass ein sich bewegendes Objekt ein Schutzfeld oder Teilschutzfeld betritt und wieder verlässt und so entsprechende Abfolgen von Schutzfeldeingriffen in den zugehörigen sicheren Ausgangssignalen erzeugt. Es können alternative und komplexere Codespuren nachgeahmt werden als ein einfaches Alternieren, wobei ..ABBABAAB.. nur eines von unzähligen weiteren Beispielen ist. Ferner ist denkbar, mindestens ein weiteres Schutzfeld C, D ... hinzuzunehmen und damit mächtigere Codes zu bilden. Das alles ist an sich bekannt, beispielsweise von Drehgebern, und wird daher hier nicht im Detail, sondern am einfachen stellvertretenden Beispiel ..ABABABA.. beschrieben.

Vorzugsweise wird die Abfolge der Schutzfeldeingriffe mit einem Inkrementalgeber-Verfahren für die Auswertung der Abtastsignale zweier zueinander versetzter Codespuren einer Maßverkörperung ausgewertet. Die Analogie zu einem Inkrementalgeber wird somit nicht nur in den Codespuren, sondern auch deren Auswertung hergestellt. Der zeitliche Verlauf der sicheren Ausgangssignale entsprechend der Abfolge der Schutzfeldeingriffe wird behandelt wie die Abtastsignale eines Inkrementalgebers. Damit steht das gesamte mächtige Arsenal an Codierungen und Auswertungen zur Verfügung, das für Inkrementalgeber entwickelt wurde, damit an sich bekannt ist, und das erfindungsgemäß einsetzbar ist, ohne es hier im Einzelnen zu erläutern.

Nach einem Schutzfeldeingriff werden vorzugsweise in der unteren Lage die Schutzfelder längs einer Richtung einer Annäherung an die Maschine verschoben. Das ist ein alternatives Vorgehen dazu, eine Position aus einer fixen Schutzfeldkonfiguration zu bestimmen. Mit den Schutzfeldern verschieben sich zugehörige etwaige Teilschutzfelder gleichermaßen. Insbesondere verschiebt sich auch ein Freibereich mit dem Fahrzeug zur Maschine hin, wobei das Fahrzeug immer wieder in das vor dem Freibereich gelegene Schutzfeld vorstößt und durch diesen Schutzfeldeingriff ein erneutes Verschieben auslöst. Ein Zähler kann die Anzahl Verschiebungen registrieren, um so jeweils die aktuelle Position inkrementell zu bestimmen. Die Verschiebung kann durch Umschaltung in eine Schutzfeldkonfiguration mit versetzter Anordnung der Schutzfelder erreicht werden. Es genügen wenige Schutzfeldkonfigurationen, die sich zyklisch wiederholen. Das Fahrzeug befindet sich nach einem solchen Zyklus nicht mehr im selben, sondern einem benachbarten Freibereich. Durch zwei alternierende Schutzfelder kann zwischen einer Vorwärts- und Rückwärtsbewegung unterschieden werden. Ein Zähler wird je nach Bewegungsrichtung mit den Verschiebungen oder Umschaltungen herauf- oder heruntergezählt.

Vorzugsweise wird, wenn sich ein Fahrzeug bei der Maschine befindet, auf Schutzfelder umgeschaltet, die die Maschine absichern und kein weiteres Fahrzeug in der Nähe der Maschine zulassen. In diesem Zustand ist die Annäherung des Fahrzeugs abgeschlossen, und die Kooperation von Fahrzeug und Maschine wird vollzogen, beispielsweise Material oder ein Werkstück entladen, beladen oder von einem Roboter bearbeitet. Während solcher Arbeitsschritte der Maschine wird das Umfeld mit den umgeschalteten Schutzfeldern abgesichert, damit sich keine Person und nach Möglichkeit auch kein anderes Fahrzeug mehr nähert. Sollen doch mehrere Fahrzeuge bei der Maschine zugelassen sein, so kann dies insbesondere mit der oben erwähnten Schutzfeldkonfiguration mit mehreren Schutzfeldern oder Teilschutzfeldern in einer Richtung quer zu einer Richtung der Annäherung beziehungsweise mehreren Gassen erreicht werden. Durch entsprechende Schutzfeldkonfiguration ist auch möglich, mehrere Bereiche vor der Maschine zu unterscheiden, so dass in einem Bereich neben dem Fahrzeug mit voller Geschwindigkeit weitergearbeitet werden kann.

Die Maschine läuft bevorzugt automatisch wieder an, wenn kein Schutzfeldeingriff vorliegt und anhand der vorangehenden Abfolge von Schutzfeldeingriffen erkannt wurde, dass sich ein Fahrzeug oder eine Person aus dem Bereich der Schutzfelder entfernt hat. Das Fahrzeug war also bei der Maschine und fährt wieder weg. Dies lässt sich analog zur Erkennung der Annäherung aus der Abfolge der Schutzfeldeingriffe bestätigen. Es ist dann sichergestellt, dass das Umfeld der Maschine wieder frei ist, so dass ein Wiederanlauf ohne die bisher übliche händische Bestätigung erfolgen kann. Bei ausreichend komplexer Schutzfeldkonfiguration in der oberen Lage ist auch für eine Person, die eine Absicherung ausgelöst hat, deren Weggehen sicher feststellbar, so dass die Absicherung aufgehoben werden und die Maschine automatisch wiederanlaufen kann.

Eine Höhe der unteren Lage wird bevorzugt in Abhängigkeit von einem erwarteten Fahrzeug oder einem Beladungszustand eines Fahrzeugs angepasst. Diese Höhe lässt sich auch über die Höhe einer Trennebene zwischen der unteren Lage und der oberen Lage definieren. Bei einer Anpassung nimmt also die untere Lage im Volumen zu oder ab, sozusagen ihrer Dicke, oder sie verschiebt sich nach oben oder unten, und die obere Lage wird entsprechend in ihrer Höhenlage versetzt. Die Anpassung kann beispielsweise dadurch veranlasst werden, dass bestimmte Fahrzeuge einer Höhe kleiner der neuen Höhe der unteren Lage zugelassen werden sollen, oder dadurch, dass sich im Zuge eines Be- und Entladens an der Maschine die effektive Höhe eines Fahrzeugs verändert. Die Anpassung kann durch einen neuen Betriebsmodus oder dynamisch vorgenommen werden. Vorzugsweise ist zusätzliche Sensorik vorgesehen, die eine effektive Höhe eines Fahrzeugs vermisst. Dafür können auch Rohdaten des optoelektronischen Sensors verwendet werden.

Die erfindungsgemäße Überwachungsvorrichtung weist mindestens einen sicheren optoelektronischen Sensor und eine an den optoelektronischen Sensor angeschlossenen Sicherheitssteuerung auf. Mit Sicherheitssteuerung ist eine sichere Auswertungseinheit gemeint, die in beliebiger Hardware realisiert ist, insbesondere eine Sicherheitssteuerung als für Sicherheitsanwendungen zugelassene Steuerung im engeren Sinne. Der sichere optoelektronische Sensor umfasst einen Lichtempfänger, der ein Empfangssignal aus Empfangslicht aus dem Überwachungsbereich erzeugt. Je nach Sensor ist das Empfangssignal beispielsweise das Signal einer Photodiode, die einen zurückkommenden Abtaststrahl empfängt, oder es sind Bilddaten eines Bildsensors verallgemeinernd als Empfangssignal bezeichnet. Mit dem Empfangssignal erfolgt in einer Auswertungseinheit des Sensors eine Überwachung mehrerer im Umfeld der Maschine konfigurierter Schutzfelder auf Schutzfeldeingriffe. Bei einem Schutzfeldeingriff wird ein sicheres Ausgangssignal an einem sicheren Ausgang des Sensors erzeugt, das dem Schutzfeld zugeordnet ist. Dafür verfügt der Sensor über mindestens zwei sichere Ausgänge, insbesondere OSSDs, an denen jeweils ein vorzugsweise binäres sicheres Ausgangssignal ausgegeben werden kann. Die beiden sicheren Ausgänge sind vorzugsweise eigene physische Anschlüsse, können aber auch als Bit oder dergleichen einer komplexeren sicheren Ausgabe realisiert sein. Die Schutzfeldkonfiguration und die Auswertung einer Abfolge von Schutzfeldeingriffen zur Unterscheidung eines sich an die Maschine annähernden Fahrzeugs und einer sich annähernden Person sind analog dem erfindungsgemäßen Verfahren in einer der beschriebenen Ausführungsformen.

Der sichere optoelektronische Sensor ist bevorzugt eine 3D-Kamera, insbesondere eine Lichtlaufzeitkamera. Damit lässt sich ein großer Überwachungsbereich erfassen, und die dreidimensionale Konfiguration und Überwachung von Schutzfeldern und Teilschutzfeldern ist in einem feinen Raster möglich. Alternativ zu einer 3D-Kamera kann ein anderer 3D-Sensor eingesetzt werden, beispielsweise ein Mehrlagenlaserscanner oder ein 3D-LIDAR.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Blockdarstellung einer 3D-Lichtlaufzeitkamera;
- Fig. 2: eine schematische Darstellung einer Überwachungsvorrichtung mit zwei Kameras und einer Sicherheitssteuerung;
- Fig. 3: eine schematische Darstellung einer beispielhaften Schutzfeldkonfiguration mit Schutzfeldeingriffen bei einem sich an eine abzusichernde Maschine annähernden Fahrzeug;
- Fig. 4: eine schematische Darstellung der Schutzfeldkonfiguration gemäß Figur 3 mit Schutzfeldeingriffen bei einer sich an die Maschine annähernden Person;
- Fig. 5: eine schematische Darstellung der Schutzfeldkonfiguration gemäß Figur 3, wobei nun das Fahrzeug die Maschine erreicht hat;
- Fig. 6: eine Darstellung, in der in der Situation der Figur 5 auf eine neue Schutzfeldkonfiguration umgeschaltet wurde, die einen gemeinsamen Arbeitsschritt der Maschine und des Fahrzeugs absichert;
- Fig. 7: eine vereinfachte Darstellung einer Schutzfeldkonfiguration mit mehreren nebeneinander angeordneten Gassen;
- Fig. 8: eine vereinfachte Darstellung einerweiteren Schutzfeldkonfiguration mit Umschaltung auf einen anderen Schutzfeldsatz bei Erreichen der Maschine und zwei durch verschiedene Schutzfelder überwachten Arbeitsbereichen;
- Fig. 9: eine vereinfachte Darstellung einer weiteren Schutzfeldkonfiguration, in der die Schutzfelder mit der Fahrzeugbewegung verschoben beziehungsweise umgeschaltet werden;
- Fig. 10: eine schematische Darstellung von vier beispielhaften Schutzfeldsätzen, zwischen denen bei einer Objektbewegung zyklisch umgeschaltet wird, um die Verschiebung gemäß Figur 9 zu realisieren; und
- Fig. 11: eine schematische Darstellung einerweiteren Schutzfeldkonfiguration, in der je nach Beladungszustand des Fahrzeugs auf einen anderen Schutzfeldsatz umgeschaltet wird.

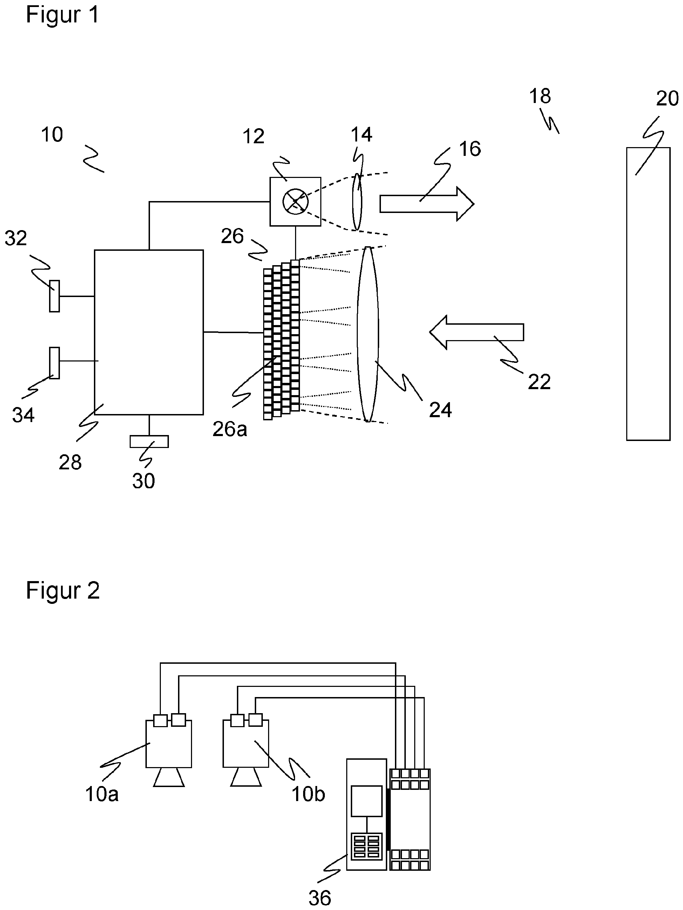

Figur 1 zeigt eine schematische Blockdarstellung einer Kamera 10, die vorzugsweise als 3D-Lichtlaufzeitkamera ausgebildet ist und die stellvertretend für einen optoelektronischen Sensor beschrieben wird, der im Zusammenhang mit der Erfindung eingesetzt werden kann. Eine Beleuchtungseinheit 12 sendet durch eine Sendeoptik 14 moduliertes Sendelicht 16 in einen Überwachungsbereich 18 aus. Als Lichtquelle kommen LEDs oder Laser in Form von Kantenemittern oder VCSEL in Betracht. Die Beleuchtungseinheit 12 ist derart ansteuerbar, dass die Amplitude des Sendelichts 16 mit einer Frequenz typischerweise im Bereich von 1 MHz bis 1000 MHz moduliert wird. Die Modulation ist beispielsweise sinus- oder rechteckförmig, jedenfalls eine periodische Modulation. Durch die Frequenz entsteht ein begrenzter Eindeutigkeitsbereich der Abstandsmessung, so dass für große Reichweiten der Kamera 10 kleine Modulationsfrequenzen erforderlich sind. Alternativ werden Messungen bei zwei bis drei oder mehr Modulationsfrequenzen durchgeführt, um in Kombination der Messungen den Eindeutigkeitsbereich zu vergrößern.

Trifft das Sendelicht 16 in dem Überwachungsbereich 18 auf ein Objekt 20, so wird ein Teil als Empfangslicht 22 zu der Kamera 10 zurückgeworfen und dort durch eine Empfangsoptik 24, beispielsweise eine Einzellinse oder ein Empfangsobjektiv, auf einen Bildsensor 26 geführt. Der Bildsensor 26 weist eine Vielzahl von beispielsweise zu einer Matrix oder Zeile angeordneten Empfangselementen oder Empfangspixeln 26a auf. Die Auflösung des Bildsensors 26 kann von zwei oder einigen wenigen bis hin zu tausenden oder Millionen Empfangspixeln 26a reichen. Darin findet eine Demodulation entsprechend einem Lock-In-Verfahren statt. Durch wiederholte Erfassung mit über die Wiederholungen jeweils geringfügig versetzter Modulation des Sendelichts 16 werden mehrere Abtastwerte erzeugt, aus denen sich letztlich die Phasenverschiebung zwischen Sendelicht 16 und Empfangslicht 22 und damit die Lichtlaufzeit messen lässt. Die Pixelanordnung ist typischerweise eine Matrix, so dass sich eine laterale Ortsauflösung in einer X- Richtung und einerY-Richtung ergibt, was sich mit der Z-Richtung der Abstandsmessung zu den dreidimensionalen Bilddaten ergänzt. Diese 3D-Erfassung ist vorzugsweise gemeint, wenn von einer 3D-Kamera, einer 3D-Lichtlaufzeitkamera oder dreidimensionalen Bilddaten gesprochen wird. Prinzipiell sind aber auch andere Pixelanordnungen denkbar, etwa eine Pixelzeile, die in einer Matrix ausgewählt wird oder die den ganzen Bildsensor einer Zeilenkamera bildet.

In einer Steuer- und Auswertungseinheit 28 mit mindestens einem digitalen Rechenbaustein wie einem Mikroprozessor oder dergleichen ist mindestens ein Schutzfeld konfiguriert, vorzugsweise sind zwei oder noch mehr Schutzfelder konfiguriert. Schutzfelder sind geometrische Vorgaben für einen Teilbereich des Überwachungsbereichs 18, die beispielsweise in einem CAD-Programm oder auf beliebig andere Weise mittels der Steuerund Auswertungseinheit 28 konfiguriert oder über eine Schnittstelle 30 eingespielt werden. Die Schutzfelder werden auf Objekteingriffe überwacht, und bei einer Schutzfeldverletzung wird an einem dem Schutzfeld zugeordneten sicheren Ausgang 32, 34 ein sicheres Ausgangssignal ausgegeben. Der Zustand des sicheren Ausgangs reflektiert demnach binär die Anwesenheit oder Abwesenheit eines Objekts im zugehörigen Schutzfeld. In Ausführungsformen mit zwei Schutzfeldern werden die Schutzfelder im Folgenden immer wieder als Schutzfeld A und B bezeichnet, demensprechend der zugehörige sichere Ausgang 32, 34 als OSSD A und OSSD B. Die Kamera 10 und insbesondere die Schutzfeldauswertung samt der Ausgangssignale oder OSSD-Zustände sind sicher im einleitend definierten Sinne.

Figur 2 zeigt eine schematische Darstellung einer Überwachungsvorrichtung mit zwei Kameras 10a-b und einer Sicherheitssteuerung 36. In einer alternativen Ausführungsform ist nur eine Kamera vorgesehen, wobei auch andere optoelektronische Sensoren möglich sind, insbesondere 3D-Kameras nach einem anderen Prinzip wie Stereoskopie oder einem Projektions- oder Lichtschnittverfahren, aber auch ein Mehrlagen-Laserscanner oder ein 3D-LIDAR. Die nun zu beschreibende Auswertung der Schutzfeldeingriffe erfolgt in einer Sicherheitssteuerung 36, wobei dies zunächst allgemein als sichere Auswertung einer Recheneinheit in beliebiger Hardware und nur vorzugsweise als Sicherheitssteuerung im engeren Sinne zu verstehen ist. Die Sicherheitssteuerung 36 wertet die Abfolge der Schutzfeldeingriffe aus. Wird eine Gefahr erkannt, so wird ein sicherheitsgerichtetes Signal an eine überwachte Maschine oder einen Roboter ausgegeben. Die Maschine oder der Roboter wird daraufhin langsamer oder weicht auf Arbeitsschritte aus, die zumindest bei dieser erkannten Objektbewegung nicht gefährden können, und nur notfalls wird die Maschine in einen sicheren Zustand überführt. Damit wird insgesamt eine hohe Verfügbarkeit und Produktivität erzielt. Erkennt die Sicherheitssteuerung 36 anhand der Abfolge der Schutzfeldeingriffe, dass es ein zulässiges Fahrzeug und keine Person ist, die sich näher, so erfolgt keine Absicherung oder nur eine mildere Absicherung wie eine Verlangsamung. Dem Fahrzeug soll die Annäherung an die Maschine erlaubt sein, um dort einen gemeinsamen Arbeitsschritt der Maschine und des Fahrzeugs durchzuführen, insbesondere einen Be- oder Entladevorgang oder eine Bearbeitung an einem Werkstück auf dem Fahrzeug.

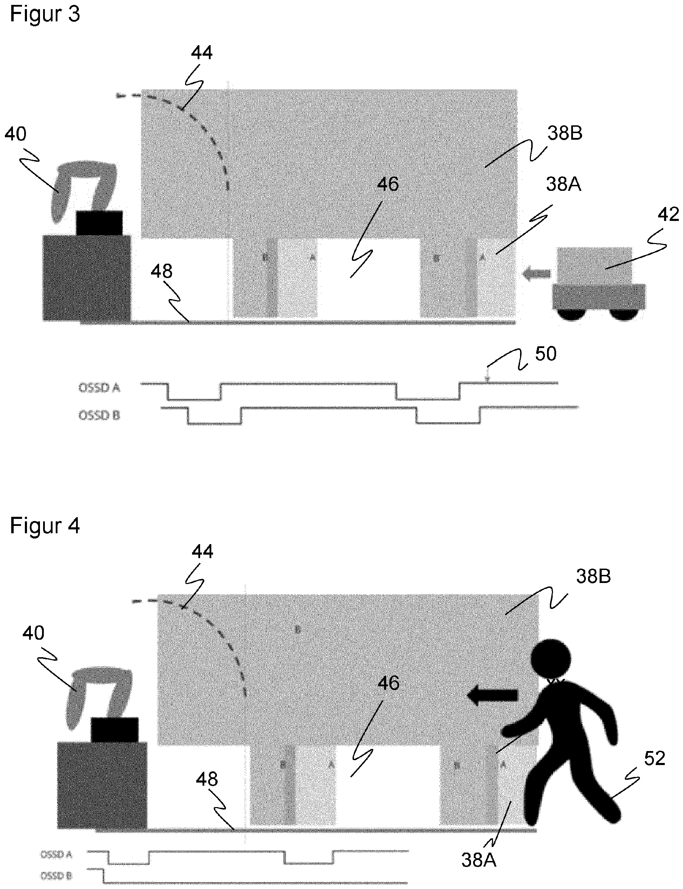

Figur 3 zeigt eine schematische Darstellung einer beispielhaften Schutzfeldkonfiguration bei einer bevorzugten Anzahl von zwei Schutzfeldern 38A-B oder kurz Schutzfeld A und Schutzfeld B sowie im unteren Teil eine Abfolge von Schutzfeldeingriffen in den zu den Schutzfeldern A und B zugehörigen Signalen OSSD A und OSSD B bei einem sich an eine abzusichernde Maschine 40 beziehungsweise deren Arbeitsbereich 44 annähernden Fahrzeug 42. Durch die besondere Schutzfeldkonfiguration wird eine sichere Unterscheidung des Fahrzeugs 42 von einer sich annähernden Person sowie eine automatische Wiederanlauffunktion ermöglicht, wenn das Fahrzeug 42 sich wieder aus dem Umfeld der Maschine 40 entfernt hat. Dabei ist die dargestellte Schutzfeldkonfiguration nur ein Beispiel, mit dem dies gelingt, es sind zahlreiche Alternativen gemäß den hier vorgestellten Erläuterungen möglich. Die gezeigte Schutzfeldkonfiguration wird vorzugsweise aus einer Perspektive von oben überwacht, aber auch das ist beispielhaft.

Der Begriff Schutzfeld ist weit gefasst. Es handelt sich um eine dreidimensionale Überwachungsgeometrie, die aus mehreren ebenfalls dreidimensionalen Teilschutzfeldern zusammengesetzt sein kann, die unterschiedliche Abmessungen und Formen haben können und einander nicht berühren müssen. Dadurch lassen sich sehr komplexe geometrische Strukturen erstellen, die auf Applikationen maßgeschneidert werden können. Wegen der Zusammenfassung von Teilschutzfeldern in ein Schutzfeld wird derselbe Schutzfeldeingriff ausgelöst, sobald irgendwo ein Objekt in das Schutzfeld eindringt. Durch die geometrische Ausgestaltung der Schutzfelder ergibt sich bei Annäherung des Fahrzeugs 42 ein charakteristisches zeitliches Pulsmuster, das unten in Figur 3 für die beiden gezeigten Schutzfelder A und B an den zugehörigen sicheren Signalen OSSD A und B illustriert ist und das sich eindeutig von dem Pulsmuster Wegfahren in umgekehrter Fahrtrichtung unterscheidet. Mit diesem Pulsmuster ist der Annäherungszustand des Fahrzeugs 42 jederzeit an der Abfolge der Schutzfeldeingriffe ablesbar, die sich pulsartig in den sicheren Signalen OSSD A und OSSB äußern.

Die Schutzfelder sind so konfiguriert, dass sich eine untere Lage und eine obere Lage ergeben, die sich in ihrer Schutzfeldgeometrie voneinander unterscheiden. Das Fahrzeug 42 ist beispielsweise ein Logistikfahrzeug und deutlich niedriger als eine aufrechte Person. Die noch zulässige Höhe des Fahrzeugs 42 korrespondiert mit der Höhe der unteren Lage oder der Höhe einer Trennebene zwischen den Lagen. Das Fahrzeug 42 verletzt dann bei der Annäherung nur Schutzfelder in der unteren Lage, während eine sich nähernde, aufrecht gehende Person unweigerlich auch in Schutzfelder der oberen Lage eindringt.

In der unteren Lage sind in diesem Beispiel die Schutzfelde A und B so konfiguriert, dass Teilschutzfelder einander paarweise abwechseln und überlappen, wobei jeweils ein Freibereich folgt. Wenn sich das Fahrzeug 42 nähert, das auf dem Boden 48 und durch die untere Lage fährt, so wird zunächst das Schutzfeld A verletzt, dann zusätzlich das Schutzfeld B, dann nur noch das Schutzfeld A und dann im Freibereich 46 kein Schutzfeld. Das wiederholt sich ein zweites Mal bei den beiden linken, näher an der Maschine 40 gelegenen Teilschutzfeldern. Diese erwartete Abfolge von Schutzfeldeingriffen ist in den unten in Figur 3 gezeigten sicheren Ausgangssignalen eindeutig nachvollziehbar. Dabei liefert der Überlapp eine zusätzliche Konsistenzbedingung: Der Zwischenzustand, in dem beide Schutzfelder A und B verletzt sind, erlaubt es stets, eine zwischenzeitliche Richtungsumkehr von einer fortgesetzten Bewegung zu unterscheiden.

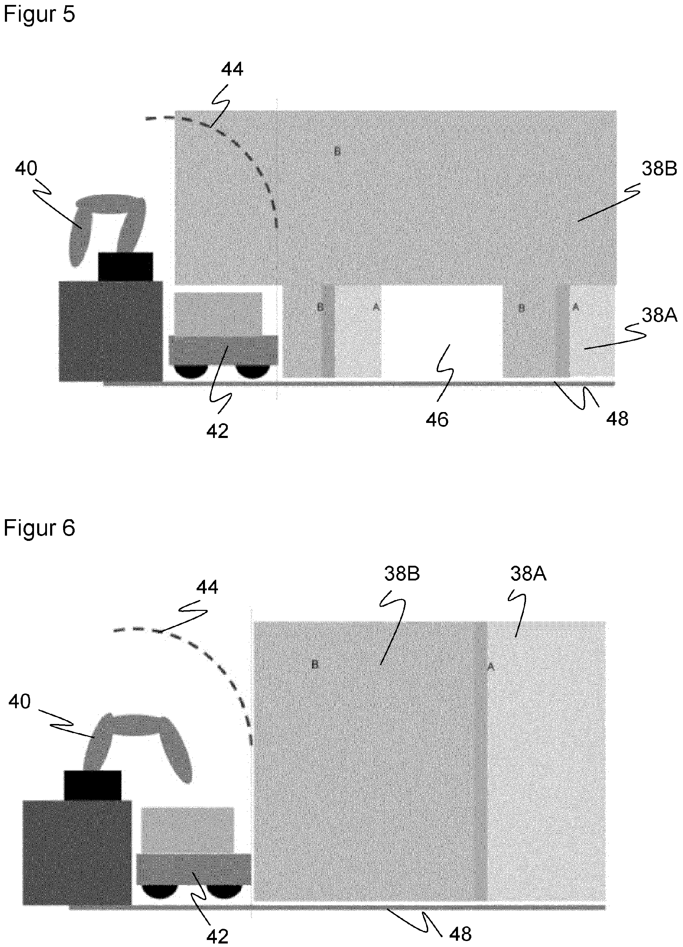

Bei dem Pfeil 50 ist der Freibereich 46 unmittelbar vor der Maschine 40 erreicht. Hier erfolgt vorzugsweise eine Schutzfeldumschaltung, die später unter Bezugnahme auf die Figur 5 erläutert wird. Bewegt sich das Fahrzeug 42 später von der Maschine 40 in umgekehrte Bewegungsrichtung wieder fort, so kehren sich die Phasenlagen in den sicheren Ausgangssignalen um. Somit kann die Bewegungsrichtung eindeutig und sicher unterschieden werden. Durch Zählen der Pulse oder Pulsgruppen kann eine zumindest grobe Position innerhalb der Annäherungsbewegung bestimmt werden, hier etwa in den Klassen "am Roboter", "im Zwischenbereich" und "außerhalb des Gefahrenbereichs". Die Auswertung der Pulse hinsichtlich ihrer binären Logik und zeitlichen Abfolge kann in der Sicherheitssteuerung 36 erfolgen, die dann entsprechende Umschaltsignale für Schutzfelder sowie Absicherungssignale und Wiederanlaufsignale für die Maschine 40 erzeugen kann.

Die Pulsfolgen, die durch die Abfolge der Schutzfeldeingriffe entstehen, entsprechen den Abtastsignalen eines Inkrementalgebers. Dieser Gedanke soll noch etwas vertieft werden. Ein Inkrementalgeber dient dazu, eine lineare Bewegung oder eine Drehbewegung in diskreten Schritten zu messen. Er verwendet dazu mindestens zwei getrennten Codespuren mit inkrementellen Codeelementen, die bei Bewegung jeweils ein binäres periodisches Signal erzeugen. Die Signale beider Codespuren sind zueinander phasenverschoben, was die Bestimmung der Bewegungsrichtung ermöglicht. Das Prinzip lässt sich auf eine Positionsbestimmung während der Annäherung an die Maschine 40 übertragen. Bei einem Inkrementalgeber erzeugt die Abtastung eines jeweiligen Codeelements einen Puls im Abtastsignal. Das ist ganz analog den in Figur 3 gezeigten Pulsfolgen.

Zwei einander jeweils überlappende Teilschutzfelder können demnach als ein Codeelement zweier inkrementeller Codespuren aufgefasst werden, wobei die Codespur durch Verfeinerung der alternierenden Anordnung in der unteren Lage gemäß Figur 3 verlängert und verfeinert werden kann. Mit jedem Puls oder Doppelpuls wird ein Zähler entsprechend der aus der Abfolge erkannten Bewegungsrichtung herauf- oder heruntergezählt. Der Zählerwert kann wie oben in Positionsklassen ausgewertet oder unter Verwendung der konkreten Schutzfeldgeometrie in eine Position umgerechnet werden. Die Codespuren sind im gezeigten Beispiel nicht nur deshalb sehr einfach, weil es effektiv nur zwei Codeelemente gibt, sondern auch aufgrund der regelmäßigen, gleichartigen, alternierenden und überlappenden Teilschutzfeldern. Es sind von Inkrementalgebern zahlreiche andere Codierungen und Auswertungen bekannt. Solche Codespuren lassen sich mit Teilschutzfeldern nachahmen, und auf die entsprechenden Signale an den OSSDs kann dann das Auswertungsverfahren des Inkrementalgebers angewandt werden. Das betrifft insbesondere die Genauigkeit der Position Robustheit der Auswertung. Als ein Beispiel sei ein Entprellen des Umschaltens genannt. Beim Prellen befindet sich ein Objekt an einer Schutzfeldgrenze und löst durch kleine Bewegungen das Schutzfeld immer wieder aus. Eine Möglichkeit des Entprellens besteht darin zu verlangen, dass nach einem Schutzfeldeingriff in das Schutzfeld A zunächst ein Schutzfeldeingriff in das Schutzfeld B erfolgen muss und umgekehrt, ansonsten wird der Schutzfeldeingriff ignoriert. Inkrementalgeber kennen aber noch aufwändigere Verfahren zum Entprellen.

Da die Schutzfeldauswertung und die Signale an den OSSDs bereits im Sinne der funktionalen Sicherheit verlässlich sind, muss lediglich noch die einfache Auswertung der Abfolge von Schutzfeldeingriffen und, falls eine Positionsauswertung gewünscht ist, eine Zählerauswertung unter den Vorgaben der funktionalen Sicherheit realisiert werden. Dafür genügt schon eine Sicherheitssteuerung 36 mit sehr moderater Leistungsfähigkeit. Das ist ein großer Vorteil, weil so eine Umsetzung praktisch ohne Entwicklungsarbeit mit vorhandener Hardware möglich ist.

Figur 4 zeigt eine schematische Darstellung der Schutzfeldkonfiguration gemäß Figur 3 nun mit den Schutzfeldeingriffen bei einer sich annähernden Person 52. Wegen der anderen Ausgestaltung der Schutzfelder in der oberen Lage ergibt sich eine andere Abfolge der Schutzfeldeingriffe. Das Schutzfeld B ist dauerhaft verletzt, daraus resultiert ein dauerhafter LOW-Zustand an OSSD B und nicht die charakteristische Pulsfolge der Figur 3 bei einem sich annähernden Fahrzeug 42. Im Gegensatz zu dem Fahrzeug 42 ist der Person 52 die Annäherung an die Maschine 40 nicht erlaubt. Die Maschine 40 wird abgesichert. Das sichere Ausgangssignal OSSD A nimmt hier den gleichen Verlauf wie bei einem Fahrzeug, was nur dann geschieht, wenn exklusiv die in Figur 4 sichtbaren Bereiche durch das Schutzfeld A belegt sind. Zur Vermeidung von Verdeckungen kann die Anforderung bestehen, das Schutzfeld A abweichend von der Darstellung ebenfalls in der oberen Lage überlappend mit dem Schutzfeld B zu konfigurieren. Dementsprechend verliefe dann OSSD B genauso wie OSSD A. Das ändert nichts daran, dass die sich nähernde Person 52 eine signifikant andere Abfolge von sicheren Ausgangssignalen erzeugt als ein sich näherndes Fahrzeug 42 und ist daher nur ein weiteres Beispiel für die sehr weitgehende Freiheit, Schutzfelder in den oberen und unteren Lagen zu konfigurieren und dabei den Erfindungsgedanken umzusetzen.

Prinzipiell wäre es möglich, die obere Lage der Schutzfelder zu vermeiden, indem die Person 52 sich kriechend fortbewegt. Das ist wegen der äußerst unbequemen Fortbewegung und der nicht sichtbaren Schutzfelder eine wenig wahrscheinliche Form der Manipulation. Es kann für einen ergänzenden Unterkriechschutz einer der Freibereiche 46 so klein konfiguriert werden, dass eine kriechende Person nicht hineinpasst. Das kann nicht nur die gezeigte Richtung der Annäherung betreffen, sondern auch die Querrichtung senkrecht zur Papierebene.

In Figur 4 ist die Schutzfeldkonfiguration in der oberen Lage sehr einfach gehalten. Das genügt für die Absicherung gegen eine sich annähernde Person 52. Dennoch sind auch komplexere Schutzfelder in der oberen Lage denkbar. Insbesondere kann dadurch oder im Zusammenspiel beider Lagen eine Positionsbestimmung auch für eine sich annähernde Person 52 realisiert werden, vorzugsweise analog zu einem Inkrementalgeber, wie dies zu Figur 3 für ein Fahrzeug 42 in der unteren Lage erläutert wurde. Dadurch werden beispielsweise differenziertere Absicherungen möglich, wie zunächst nur eine Verlangsamung der Maschine 40, solange eine Person 52 noch einen gewissen Abstand hat, oder ein sukzessives Verlangsamen bis hin zum Stillstand bei fortgesetzter Annäherung.

Figur 5 zeigt eine schematische Darstellung der Schutzfeldkonfiguration gemäß Figur 3, wenn das Fahrzeug 42 die Maschine 40 erreicht hat. Das lässt sich aus der Abfolge der Schutzfeldeingriffe erkennen, die entsprechende Stelle in den Pulsfolgen ist unten in Figur 3 mit dem Pfeil 50 markiert. Vorzugsweise wird in dieser Situation auf eine andere Schutzfeldkonfiguration umgeschaltet, schon weil sonst bei einer Kooperation zwischen Maschine 40 und Fahrzeug 42 ein Schutzfeldeingriff der Maschine 40 erfolgen würde, der nicht von einer an der anderen Seite eindringenden Person 52 unterschieden würde.

Figur 6 zeigt eine Darstellung einer beispielhaften Schutzfeldkonfiguration nach dem Umschalten. Hiermit wird ein gemeinsamer Arbeitsschritt der Maschine 40 und des Fahrzeugs 42 abgesichert, insbesondere ein Be- oder Entladevorgang. Der Zugang von außen ist vorübergehend vollständig gesperrt, der Arbeitsbereich für die Maschine 40 ist erweitert. Wenn sich das Fahrzeug 42 wieder von der Maschine 40 entfernt, wird zuerst das Schutzfeld B verletzt, und das löst eine erneute Umschaltung der Schutzfeldkonfiguration, vorzugsweise Rückschaltung auf die ursprüngliche Schutzfeldkonfiguration aus. Mit der in Figur 6 gezeigten Schutzfeldkonfiguration kann das Wegfahren des Fahrzeugs 42 von dem Fall unterschieden werden, dass sich von der anderen Seite eine Person 52 nähert, die nämlich zuerst das Schutzfeld A verletzt. Mit der zu Figur 3 beschriebenen Auswertung der Abfolge von Schutzfeldeingriffen bei Wegfahrt des Fahrzeugs 42 wird sicher festgestellt, wenn das Fahrzeug 42 den Gefahrenbereich verlassen hat, und dies kann genutzt werden, um einen automatischen Wiederanlauf der Maschine 40 einzuleiten. Die Schutzfeldkonfiguration verhindert, dass womöglich eine Person 52 in der Nähe der Maschine 40 verblieben ist, etwa durch Aufsteigen auf eine erhöhte Struktur. Es kann also sicher ermittelt werden, ob noch eine Person 52 gefährdet würde, und damit sind die Voraussetzungen für einen automatischen Wiederanlauf ohne das Erfordernis einer manuellen Freigabe erfüllt.

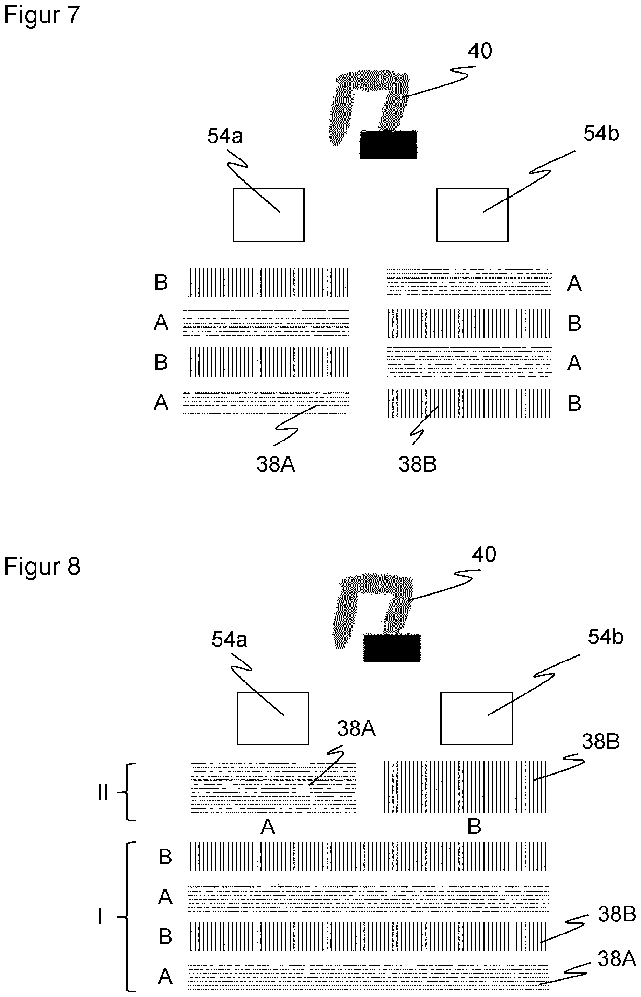

Die Schutzfeldkonfigurationen der Figuren 3 bis 6 wurden verwendet, um Ausführungsformen der Erfindung zu erläutern. Das ist nur als Beispiel zu verstehen, zahlreiche Variationsmöglichkeiten wurden bereits genannt. Die Figuren 7 und 8 zeigen zwei von sehr vielen Möglichkeiten, die Schutzfelder auch in der bisher unberücksichtigten Richtung quer zu der Annäherungsbewegung auszugestalten. Das betrifft vorzugsweise die untere Lage, kann aber auch die obere Lage betreffen oder mit einbeziehen.

Figur 7 zeigt eine vereinfachte Darstellung einer Schutzfeldkonfiguration mit mehreren nebeneinander angeordneten Gassen. Die Schutzfelder alternieren nicht nur in Richtung der Annäherungsbewegung, sondern auch quer dazu. Ein sich links annäherndes Fahrzeug 42 löst hier die Abfolge ABAB, ein sich rechts annäherndes Fahrzeug 42 hingegen die Abfolge BABA aus, während ein Fahrzeug in der Mitte mit der Abfolge AB AB AB AB jeweils beide Schutzfelder verletzt. Es werden dementsprechend unterschiedliche Arbeitsbereiche 54a-b angefahren. Das ermöglicht eine Weiterarbeit der Maschine 40 in dem jeweils nicht angefahrenen Arbeitsbereich 54a-b, sogar unter eventueller Verlangsamung dann, wenn sich im anderen Arbeitsbereich 54a-b eine Person 52 befindet. Es ist denkbar, von Anfang an oder nach einer Schutzfeldumschaltung bei Vollendung der Annäherung eine Art virtuelle Wand durch ein Schutzfeld oder Teilschutzfeld zwischen den Arbeitsbereichen 54a-b zu setzen.

Figur 8 zeigt eine vereinfachte Darstellung einer weiteren Schutzfeldkonfiguration mit Umschaltung auf einen anderen Schutzfeldsatz bei Erreichen der Maschine 40 und zwei durch verschiedene Schutzfelder überwachten Arbeitsbereichen 54a-b. Nach Vollendung der durch den Schutzfeldsatz I erkannten Annäherung wird auf einen Schutzfeldsatz II umgeschaltet, mit dem festgestellt wird, ob das Fahrzeug 42 oder die Person 52, das oder die die Maschine 40 erreicht hat, rechts oder links steht. Die Maschine 40 kann auf der anderen Seite weiterarbeiten und die Produktion aufrechterhalten.

Zu den weiteren denkbaren Schutzfeldkonfigurationen zählen zunächst Mischformen der dargestellten und erläuterten Schutzfeldkonfigurationen, beispielsweise die Kombination von Gassen gemäß Figur 7 mit einer Umschaltung auf den Schutzfeldsatz II gemäß Figur 8. Eine besonders vorteilhafte Konstellation sieht vor, den Gedanken einer Positionsbestimmung analog zu einem Inkrementalgeber auf die Querrichtung und damit eine zweidimensionale Positionsbestimmung zu erweitern, indem ein Raster aus in beiden Richtungen alternierenden Schutzfeldern gebildet wird.

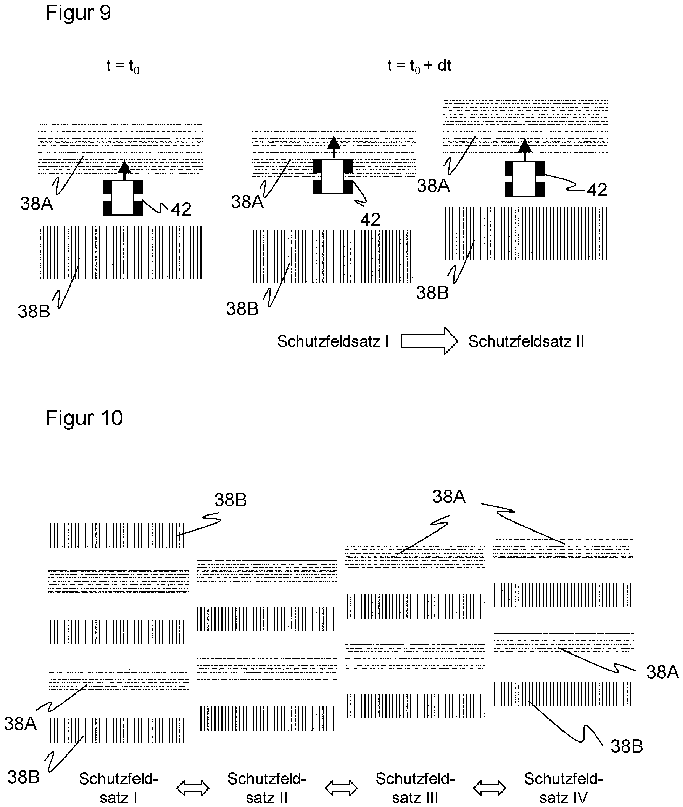

Die Figuren 9 und 10 illustrieren eine nochmals andere Ausführungsform. Dabei wird eine Annäherungsbewegung durch wiederholtes Verschieben von Schutzfeldern gleichsam verfolgt. Das ist eine Alternative zu den alternierenden, überlappenden Schutzfeldern oder Teilschutzfeldern in Analogie zu einem Inkrementalgeber. Das Verschieben wird vorzugsweise durch Umschaltung auf versetzte Schutzfelder realisiert. Figur 9 zeigt dies zunächst für einen einzelnen Umschaltschritt in drei verschiedenen Stadien. Dabei sind vereinfachend nur zwei Teilschutzfelder gezeigt, dies wird dann im Anschluss mit Figur 10 periodisch mit einer Vielzahl solcher Teilschutzfelder fortgesetzt.

Links in Figur 9 befindet sich zu einem Zeitpunkt t=t₀ ein Fahrzeug 42 zwischen zwei Teilschutzfeldern der Schutzfelder 38A-B. Ein Zähler für die Position befindet sich in einem Zustand n. Die beiden Teilschutzfelder gehören zu unterschiedlichen Schutzfeldern 38A-B, um zwischen einer Vorwärts- und Rückwärtsbewegung unterscheiden zu können. In der Mitte der Figur 9 hat sich das Fahrzeug 42 zu einem Zeitpunkt t=t0+dt vorwärts in das Teilschutzfeld des Schutzfeldes 38A bewegt. Der Zähler für die Position wird entsprechend auf n+1 heraufgezählt. Rechts in Figur 9 werden daraufhin die Schutzfelder auf eine andere Konfiguration umgeschaltet, in der die Teilschutzfelder leicht versetzt nach oben verschoben sind. Dadurch ist die Schutzfeldverletzung aufgehoben. Bei fortgesetzter Bewegung wird erneut das Schutzfeld 38A für die Vorwärtsbewegung verletzt, der Zähler auf n+2 heraufgezählt und ein weiteres Mal auf einen leicht nach oben versetzten Schutzfeldsatz umgeschaltet. Bei einer jeweiligen Rückwärtsbewegung, die anhand der Verletzung von Schutzfeld 38B statt Schutzfeld 38A erkannt wird, erfolgt eine entsprechend umgekehrte Schutzfeldumschaltung mit einem nach unten versetzten Schutzfeldsatz, und der Zähler für die Position wird um eins herabgezählt.

Figur 10 zeigt eine schematische Darstellung von vier beispielhaften Schutzfeldsätzen, zwischen denen bei einer Objektbewegung zyklisch umgeschaltet wird, um die Verschiebung gemäß Figur 9 zu realisieren. Bei diesen Schutzfeldsätzen ist die Ausdehnung in der überwachten Bewegungsrichtung für die Teilschutzfelder und die Lücken dazwischen jeweils gleich, und der Versatz erfolgt um die Hälfte dieser gemeinsamen Ausdehnung. Dadurch ist der Zyklus nach vier Umschaltungen geschlossen, wobei gegebenenfalls bei der Umschaltung zwischen dem ersten und letzten Schutzfeldsatz am Ende eines Zyklus' noch die Rollen für vorwärts und rückwärts, d.h. Schutzfeld A und B, getauscht werden können. Die Darstellung der Figur 10 ist beispielhaft, es sind viele alternative Schutzfeldsätze denkbar, mit denen durch automatische Umschaltung auf leicht versetzte Teilschutzfelder ein Zähler für die Position und damit eine sichere Verfolgung der Annäherungsbewegung umgesetzt werden kann.

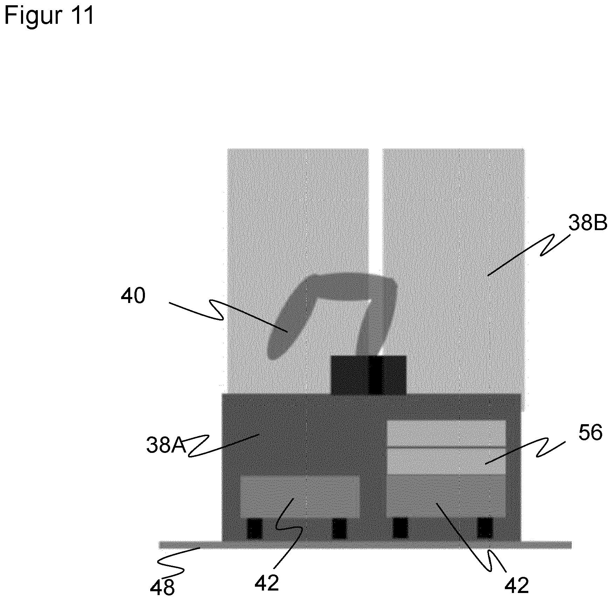

Figur 11 zeigt eine schematische Darstellung einer weiteren Schutzfeldkonfiguration, in der je nach Beladungszustand des Fahrzeugs 42 auf einen anderen Schutzfeldsatz umgeschaltet wird. Das ist ein Beispiel dafür, dass es unabhängig von einer Verschiebung wie in den Figuren 9 und 10 sinnvoll sein kann, mehr als zwei Schutzfeldsätze zu hinterlegen und dazwischen umzuschalten. In diesem Fall wird durch mindestens einen weiteren Schutzfeldsatz die Höhe der unteren Lage beziehungsweise der Trennebene zwischen den Lagen verschoben, um progressiv steigende oder sinkende Materialladezustände des Fahrzeugs 42 zu berücksichtigen. So kann das überwachende Volumen jeweils in Abhängigkeit von der durch das Material 56 effektiv variierenden Höhe des Fahrzeugs 42 den Bereich um das beladene Fahrzeug 42 so lückenlos wie nötig absichern.

Das erfindungsgemäß erreichte Sicherheitsniveau hat zunächst eine Abhängigkeit von einem Sicherheitsniveau der Kamera 10, die weiterhin stellvertretend für einen erfindungsgemäß eingesetzten optoelektronischen Sensor steht. Erreicht die Kamera beispielsweise nur das Sicherheitsniveau SIL 1 / PL c, so ist auch die erfindungsgemäße Lösung auf Anwendungen beschränkt, deren Risikobewertung ergeben hat, dass eine Risikominderung mit Performancelevel c und SIL 1 ausreichend ist. Das Sicherheitsniveau kann aber durch Verwendung einer zusätzlichen Kamera und damit zwei Kameras 10a-b wie in Figur 2 angehoben werden. Dann überwacht beispielsweise eine Kamera 10a das eine Schutzfeld A und die andere Kamera 10b das andere Schutzfeld B, oder es findet bei komplexeren Schutzfeldkonfigurationen eine andere Aufteilung auch auf noch mehr Kameras statt. Im genannten Beispiel werden nicht wie bisher zwei Schutzfelder simultan durch eine einzige Kamera 10 überwacht, sondern jede Kamera 10a-b erzeugt nur eine Pulsfolge OSSD A oder OSSD B entsprechend den Schutzfeldeingriffen in dasjenige Schutzfeld A oder B, für das die Kamera 10a-b zuständig ist. Die vollständige Pulsfolge kommt also nur zustande, wenn beide Kameras 10a-b ordnungsgemäß funktionieren. Durch diese Redundanz und gegenseitige Verkopplung der Signale kann nach IEC/TS 62998-1 ein höheres Sicherheitsniveau beansprucht werden, beispielsweise Performancelevel d für die Anwendung als Ganzes trotz eines für die einzelnen Kameras 10a-b nur zertifizierten Performancelevel c. Damit wird die Erfindung sehr allgemein auch in Anwendungen einsetzbar, von denen ein hohes Risiko ausgeht. Die Aufwertung ist insbesondere von sehr großer Bedeutung für den Einsatz an größeren Robotern oder anderen Maschinen mit höherem Gefährdungspotenzial. Zusätzlich kann je nach Anordnung der beiden baugleichen Kameras die Zentralperspektive einer einzeln eingesetzten Kamera umgangen werden. Durch die Kombination der sicheren Ausgangssignale zweier Kameras können auch effektiv noch komplexere beziehungsweise kleinere Teilschutzfelder überwacht werden.

## Patentansprüche

1. Verfahren zur berührungslosen Absicherung einer Maschine (40), bei dem mehrere im Umfeld der Maschine (40) konfigurierte Schutzfelder (38A-B) von mindestens einem optoelektronischen Sensor (10, 10a-b) auf Schutzfeldeingriffe überwacht werden und bei einem Schutzfeldeingriff ein sicheres Ausgangssignal an einem sicheren Ausgang (32, 34) erzeugt wird, das dem Schutzfeld (38A-B) zugeordnet ist, wobei die Schutzfelder (38A-B) derart konfiguriert sind, dass ein sich an die Maschine (40) annäherndes Fahrzeug (42) zu einer anderen Abfolge von Schutzfeldeingriffen führt als eine sich an die Maschine (40) annähernde Person (52) und die Abfolge von Schutzfeldeingriffen ausgewertet wird, um Fahrzeug (42) und Person (52) voneinander zu unterscheiden, **dadurch gekennzeichnet,**
**dass** der optoelektronische Sensor (10, 10a-b) dreidimensionale Schutzfelder (38A-B) überwacht, dass die Schutzfelder (38A-B) mindestens zwei Lagen aufweisen, mit einer unteren Lage und einer darüber angeordneten oberen Lage, und dass die Konfiguration der Schutzfelder (38A-B) in der unteren Lage sich von der Konfiguration der Schutzfelder (38A-B) in der oberen Lage unterscheidet, so dass ein horizontaler 2D-Schnitt durch die obere Lage ein anderes Bild der Schutzfelder liefert als ein horizontaler 2D-Schnitt durch die untere Lage.

2. Verfahren nach Anspruch 1,
wobei bei Erkennung einer sich an die Maschine (40) annähernden Person (52) die Maschine (40) abgesichert wird.

3. Verfahren nach Anspruch 1 oder 2,
wobei nur zwei Schutzfelder (38A-B) überwacht werden, die insbesondere Teilschutzfelder aufweisen.

4. Verfahren nach Anspruch 3,
wobei die beiden Schutzfelder (38A-B) von jeweils einem eigenen optoelektronischen Sensor (10a-b) auf Schutzfeldeingriffe überwacht werden.

5. Verfahren nach einem der vorhergehenden Ansprüche,
wobei die Schutzfelder (38A-B) so konfiguriert sind, dass bei Annäherung eines Objekts (42, 52) in der unten Lage zuerst ein anderes Schutzfeld (38A-B) verletzt wird als in der oberen Lage.

6. Verfahren nach einem der vorhergehenden Ansprüche,
wobei in der oberen Lage nur ein Schutzfeld (38A-B) konfiguriert ist, insbesondere ohne Teilschutzfelder.

7. Verfahren nach einem der vorhergehenden Ansprüche,
wobei in der unteren Lage zwei Schutzfelder (38A-B) oder Teilschutzfelder der zwei Schutzfelder (38A-B) derart konfiguriert sind, dass in einer Richtung einer Annäherung an die Maschine (40) die beiden Schutzfelder (38A-B) oder Teilschutzfelder einander abwechseln, wobei insbesondere die sich abwechselnden Schutzfelder (38A-B) oder Teilschutzfelder einander teilweise überlappen und/oder jeweils ein Freibereich (46) zwischen den sich abwechselnden Schutzfeldern (38A-B) oder Teilschutzfeldern angeordnet ist.

8. Verfahren nach einem der vorhergehenden Ansprüche,
wobei in der unteren Lage in einer Richtung quer zu einer Richtung einer Annäherung der Maschine (40) mehrere Schutzfelder (38A-B) oder Teilschutzfelder konfiguriert sind.

9. Verfahren nach einem der vorhergehenden Ansprüche,
wobei mindestens ein Freibereich (46) zwischen den Schutzfeldern (38A-B) oder Teilschutzfeldern der Schutzfelder (38A-B) der unteren Lage in seiner lateralen Ausdehnung so klein ist, dass eine liegende oder kriechende Person (52) darin nicht vollständig Platz findet.

10. Verfahren nach einem der vorhergehenden Ansprüche,
wobei aus der Abfolge von Schutzfeldeingriffen eine Bewegungsrichtung bestimmt wird, und wobei insbesondere ein Zähler bei einem Schutzfeldeingriff oder einem endenden Schutzfeldeingriff entsprechend der Bewegungsrichtung herauf- und heruntergezählt und aus einem Stand des Zählers eine Position bestimmt wird.

11. Verfahren nach einem der vorhergehenden Ansprüche,
wobei nach einem Schutzfeldeingriff in der unteren Lage die Schutzfelder (38A-B) längs einer Richtung einer Annäherung an die Maschine (40) verschoben werden, insbesondere durch Umschaltung auf eine Schutzfeldkonfiguration mit versetzter Anordnung der Schutzfelder (38A-B).

12. Verfahren nach einem der vorhergehenden Ansprüche,
wobei, wenn sich ein Fahrzeug (42) bei der Maschine (40) befindet, auf Schutzfelder (38A-B) umgeschaltet wird, die die Maschine (40) absichern und kein weiteres Fahrzeug (42) in der Nähe der Maschine (40) zulassen.

13. Verfahren nach einem der vorhergehenden Ansprüche,
wobei die Maschine (40) automatisch wieder anläuft, wenn kein Schutzfeldeingriff vorliegt und anhand der vorangehenden Abfolge von Schutzfeldeingriffen erkannt wurde, dass sich ein Fahrzeug (42) oder eine Person (52) aus dem Bereich der Schutzfelder (38A-B) entfernt hat.

14. Verfahren nach einem der vorhergehenden Ansprüche,
wobei eine Höhe der unteren Lage in Abhängigkeit von einem erwarteten Fahrzeug (42) oder einem Beladungszustand eines Fahrzeugs (42) angepasst wird.

15. Überwachungsvorrichtung zur berührungslosen Absicherung einer Maschine (40) mit mindestens einem sicheren optoelektronischen Sensor (10, 10a-b), insbesondere eine 3D-Kamera, und einer an den optoelektronischen Sensor (10, 10a-b) angeschlossenen Sicherheitssteuerung (36), wobei der optoelektronische Sensor (10, 10a-b) einen Lichtempfänger (26), mindestens einen sicheren Ausgang (32, 34) und eine Steuer- und Auswertungseinheit (28) aufweist, die dafür ausgebildet ist, anhand des Empfangssignals mehrere im Umfeld der Maschine (40) konfigurierte Schutzfelder (38A-B) auf Schutzfeldeingriffe zu überwachen und bei einem Schutzfeldeingriff ein sicheres Ausgangssignal an dem sicheren Ausgang (32, 43) zu erzeugen, das dem Schutzfeld (38A-B) zugeordnet ist, wobei die Schutzfelder (38A-B) derart konfiguriert sind, dass ein sich an die Maschine (40) annäherndes Fahrzeug (42) zu einer anderen Abfolge von Schutzfeldeingriffen führt als eine sich an die Maschine (40) annähernde Person (52) und wobei die Sicherheitssteuerung (36) dafür ausgebildet ist, die Abfolge von Schutzfeldeingriffen auszuwerten, um Fahrzeug (42) und Person (52) voneinander zu unterscheiden,
wobei der optoelektronische Sensor (10, 10a-b) für die Überwachung dreidimensionaler Schutzfelder (38A-B) ausgebildet ist, dass die Schutzfelder (38A-B) mindestens zwei Lagen aufweisen, mit einer unteren Lage und einer darüber angeordneten oberen Lage, und dass die Konfiguration der Schutzfelder (38A-B) in der unteren Lage sich von der Konfiguration der Schutzfelder (38A-B) in der oberen Lage unterscheidet, **dadurch gekennzeichnet, dass** ein horizontaler Schnitt durch die obere Lage ein anderes Bild der Schutzfelder liefert als ein horizontaler 2D-Schnitt durch die untere Lage.

## Claims

1. A method for contactless protection of a machine (40), wherein a plurality of protective fields (38A-B) configured in the vicinity of the machine (40) are monitored for protective field violations by at least one optoelectronic sensor (10, 10a-b) and, in the event of a protective field violation, a safe output signal is generated at a safe output (32, 34) that is assigned to the protective field (38A-B), wherein the protective fields (38A-B) are configured such that a vehicle (42) approaching the machine (40) leads to a different sequence of protective field violations than a person (52) approaching the machine (40), and the sequence of protective field violations is evaluated in order to distinguish vehicle (42) and person (52) from one another, **characterized in that** the optoelectronic sensor (10, 10a-b monitors three-dimensional protective fields (38A-B), **in that** the protective fields (38A-B) have at least two layers, with a lower layer and an upper layer arranged above it, and **in that** the configuration of the protective fields (38A-B) in the lower layer differs from the configuration of the protective fields (38A-B) in the upper layer, so that a horizontal 2D section through the upper layer provides a different image of the protective fields than a horizontal 2D section through the lower layer.

2. The method according to claim 1,
wherein when a person (52) approaching the machine (40) is detected, the machine (40) is secured.

3. The method according to claim 1 or 2,
wherein only two protective fields (38A-B) are monitored, which in particular have partial protective fields.

4. The method according to claim 3,
wherein the two protective fields (38A-B) are each monitored for protective field violations by a separate optoelectronic sensor (10a-b).

5. The method according to any of the preceding claims,
wherein the protective fields (38A-B) are configured such that when an object (42, 52) approaches in the lower layer, a different protective field (38A-B) is violated first than in the upper layer.

6. The method according to any of the preceding claims,
wherein only one protective field (38A-B) is configured in the upper layer, in particular without partial protective fields.

7. The method according to any of the preceding claims,
wherein in the lower layer two protective fields (38AB) or partial protective fields of the two protective fields (38A-B) are configured in such a way that in a direction of approach to the machine (40) the two protective fields (38A-B) or partial protective fields alternate with one another, wherein in particular the alternating protective fields (38A-B) or partial protective fields partially overlap one another and/or in each case a free area (46) is arranged between the alternating protective fields (38A-B) or partial protective fields.

8. The method according to any of the preceding claims,
wherein a plurality of protective fields (38A-B) or partial protective fields are configured in the lower layer in a direction transverse to a direction of an approach of the machine (40).

9. The method according to any of the preceding claims,
wherein at least one free area (46) between the protective fields (38A-B) or partial protective fields of the protective fields (38A-B) of the lower layer is so small in its lateral extent that a lying or crawling person (52) cannot be completely accommodated therein.

10. The method according to any of the preceding claims,
wherein a direction of movement is determined from the sequence of protective field violations, and wherein in particular a counter is counted up and down during a protective field violation or an ending protective field violation in accordance with the direction of movement, and a position is determined from a state of the counter.

11. The method according to any of the preceding claims,
wherein, after a protective field violation in the lower layer, the protective fields (38A-B) are displaced along a direction of approach to the machine (40), in particular by switching to a protective field configuration with offset arrangement of the protective fields (38A-B).

12. The method according to any of the preceding claims,
wherein, when a vehicle (42) is present at the machine (40), switching is made to protective fields (38A-B) which secure the machine (40) and do not allow any further vehicle (42) in the vicinity of the machine (40).

13. The method according to any of the preceding claims,
wherein the machine (40) restarts automatically if there is no protective field violation and it has been recognized on the basis of the preceding sequence of protective field violations that a vehicle (42) or a person (52) has moved away from the area of the protective fields (38A-B).

14. The method according to any of the preceding claims,
wherein a height of the lower layer is adjusted depending on an expected vehicle (42) or a loading condition of a vehicle (42).

15. A monitoring device for contactless protection of a machine (40) comprising at least one safe optoelectronic sensor (10, 10a-b), in particular a 3D camera, and a safety controller (36) connected to the optoelectronic sensor (10, 10a-b), wherein the optoelectronic sensor (10, 10a-b) comprises a light receiver (26), at least one safe output (32, 34) and a control and evaluation unit (28) configured to use the received signal to monitor a plurality of protective fields (38A-B) set up in the vicinity of the machine (40) for protective field violations and, in the event of a protective field violation, to generate a safe output signal at the safe output (32, 43) which is assigned to the protective field (38A-B), the protective fields (38A-B) being configured in such a way that a vehicle (42) approaching the machine (40) leads to a different sequence of protective field violations than a person (52) approaching the machine (40), and wherein the safety controller (36) is configured to evaluate the sequence of protective field violations in order to distinguish vehicle (42) and person (52) from one another, wherein the optoelectronic sensor (10, 10a-b) is configured for monitoring three-dimensional protective fields (38A-B), the protective fields (38A-B) have at least two layers, with a lower layer and an upper layer arranged above it, and the configuration of the protective fields (38A-B) in the lower layer differs from the configuration of the protective fields (38A-B) in the upper layer,
**characterized in that** a horizontal 2D section through the upper layer provides a different image of the protective fields than a horizontal 2D section through the lower layer.

## Revendications

1. Procédé de sécurisation sans contact physique d'une machine (40), dans lequel plusieurs champs de protection (38A-B) configurés dans l'environnement de la machine (40) sont surveillés par au moins un capteur optoélectronique (10, 10a-b) quant à des interventions sur les champs de protection et, en cas d'intervention sur les champs de protection, un signal de sortie sûr est généré à une sortie sûre (32, 34), qui est associé au champ de protection (38A-B), les champs de protection (38A-B) étant configurés de telle sorte qu'un véhicule (42) s'approchant de la machine (40) provoque une autre succession d'interventions sur les champs de protection qu'une personne (52) s'approchant de la machine (40), et la succession d'interventions sur les champs de protection étant évaluée afin de distinguer le véhicule (42) et la personne (52) l'un de l'autre,
**caractérisé en ce que**
le capteur optoélectronique (10, 10a-b) surveille des champs de protection tridimensionnels (38A-B), **en ce que** les champs de protection (38A-B) présentent au moins deux strates, incluant une strate inférieure et une strate supérieure disposée au-dessus, et **en ce que** la configuration des champs de protection (38A-B) dans la strate inférieure se distingue de la configuration des champs de protection (38A-B) dans la strate supérieure, de sorte qu'une coupe 2D horizontale à travers la strate supérieure fournit une autre image des champs de protection qu'une coupe 2D horizontale à travers la strate inférieure.

2. Procédé selon la revendication 1,
dans lequel, en cas de détection d'une personne (52) s'approchant de la machine (40), la machine (40) est sécurisée.

3. Procédé selon la revendication 1 ou 2,
dans lequel seulement deux champs de protection (38A-B) sont surveillés, qui présentent en particulier des champs de protection partiels.

4. Procédé selon la revendication 3,
dans lequel les deux champs de protection (38A-B) sont surveillés chacun par un capteur optoélectronique (10a-b) propre quant à des interventions sur les champs de protection.

5. Procédé selon l'une des revendications précédentes,
dans lequel les champs de protection (38A-B) sont configurés de telle sorte qu'à l'approche d'un objet (42, 52), dans la strate inférieure, tout d'abord un champ de protection (38A-B) autre que celui dans la strate supérieure est violé.

6. Procédé selon l'une des revendications précédentes,
dans lequel, dans la strate supérieure, un seul champ de protection (38A-B) est configuré, en particulier dépourvu de champs de protection partiels.

7. Procédé selon l'une des revendications précédentes,
dans lequel, dans la strate inférieure, deux champs de protection (38A-B) ou champs de protection partiels des deux champs de protection (38A-B) sont configurés de telle sorte que dans une direction d'approche de la machine (40), les deux champs de protection (38A-B) ou champs de protection partiels alternent l'un avec l'autre, en particulier les champs de protection (38A-B) ou champs de protection partiels alternants se chevauchent partiellement, et/ou une zone libre (46) respective est disposée entre les champs de protection (38A-B) ou champs de protection partiels alternants.

8. Procédé selon l'une des revendications précédentes,
dans lequel, dans la strate inférieure, plusieurs champs de protection (38A-B) ou champs de protection partiels sont configurés dans une direction transversale à une direction d'approche de la machine (40).

9. Procédé selon l'une des revendications précédentes,
dans lequel au moins une zone libre (46) entre les champs de protection (38A-B) ou les champs de protection partiels des champs de protection (38A-B) de la strate inférieure est si petite dans son extension latérale qu'une personne couchée ou rampante (52) n'y trouve pas entièrement place.

10. Procédé selon l'une des revendications précédentes,
dans lequel une direction de mouvement est déterminée à partir de la succession d'interventions sur les champs de protection, et
en particulier, lors d'une intervention sur les champs de protection ou à la fin d'une intervention sur les champs de protection, un compteur est incrémenté et décrémenté en fonction de la direction de mouvement, et une position est déterminée à partir d'un état de comptage du compteur.

11. Procédé selon l'une des revendications précédentes,
dans lequel, après une intervention sur les champs de protection dans la strate inférieure, les champs de protection (38A-B) sont déplacés le long d'une direction d'approche de la machine (40), en particulier par commutation vers une configuration de champs de protection avec une disposition décalée des champs de protection (38A-B).

12. Procédé selon l'une des revendications précédentes,
dans lequel, lorsqu'un véhicule (42) se trouve près de la machine (40), on commute vers des champs de protection (38A-B) qui sécurisent la machine (40) et ne permettent pas à un autre véhicule (42) de se trouver à proximité de la machine (40).

13. Procédé selon l'une des revendications précédentes,
dans lequel la machine (40) redémarre automatiquement en l'absence d'intervention sur les champs de protection et lorsqu'il a été détecté, à l'aide de la succession précédente d'interventions sur les champs de protection, qu'un véhicule (42) ou une personne (52) s'est éloigné(e) de la zone des champs de protection (38A-B).

14. Procédé selon l'une des revendications précédentes,
dans lequel une hauteur de la strate inférieure est adaptée en fonction d'un véhicule (42) attendu ou d'un état de chargement d'un véhicule (42).

15. Dispositif de surveillance pour la sécurisation sans contact physique d'une machine (40), comprenant au moins un capteur optoélectronique sûr (10, 10a-b), en particulier une caméra 3D, et une commande de sécurité (36) connectée au capteur optoélectronique (10, 10a-b), le capteur optoélectronique (10, 10a-b) comprenant un récepteur de lumière (26), au moins une sortie sûre (32, 34) et une unité de commande et d'évaluation (28) conçue pour, à l'aide du signal de réception, surveiller plusieurs champs de protection (38A-B), configurés dans l'environnement de la machine (40), quant à des interventions sur les champs de protection, et pour, en cas d'intervention sur les champs de protection, générer un signal de sortie sûr à la sortie sûre (32, 43), qui est associé au champ de protection (38A-B), les champs de protection (38A-B) étant configurés de telle sorte qu'un véhicule (42) s'approchant de la machine (40) provoque une autre succession d'interventions sur les champs de protection qu'une personne (52) s'approchant de la machine (40), et la commande de sécurité (36) étant conçue pour évaluer la succession d'interventions sur les champs de protection afin de distinguer le véhicule (42) et la personne (52) l'un de l'autre,
dans lequel
le capteur optoélectronique (10, 10a-b) est conçu pour surveiller des champs de protection tridimensionnels (38A-B), les champs de protection (38A-B) présentent au moins deux strates, incluant une strate inférieure et une strate supérieure disposée au-dessus, et la configuration des champs de protection (38A-B) dans la strate inférieure se distingue de la configuration des champs de protection (38A-B) dans la strate supérieure,
**caractérisé en ce qu'**une coupe horizontale à travers la strate supérieure fournit une autre image des champs de protection qu'une coupe 2D horizontale à travers la strate inférieure.
